# EUROPEAN PATENT APPLICATION

(11) **EP 4 459 049 A1**
(43) Date of publication of application: **06.11.2024**
(21) Application number: 22929941.7
(22) Date of filing: 24.11.2022
(51) Int. Cl.: E02F 9/20, E02F 9/26, H04N 7/18

(54) **REMOTE OPERATION PROCESSING DEVICE AND REMOTE OPERATION PROCESSING SYSTEM**

(30) Priority: 02.03.2022 JP 2022031807
(71) Applicant: KOBELCO CONSTRUCTION MACHINERY CO., LTD., Hiroshima-shi, Hiroshima 731-5161 (JP)
(72) Inventor: SASAKI Hitoshi, Tokyo 141-8626 (JP); YAMAZAKI Yoichiro, Tokyo 141-8626 (JP)
(74) Representative: Schön, Christoph
(86) International application number: PCT/JP2022/043403
(87) International publication number: WO 2023/166797

(57) **Abstract**

An object of the present invention is to provide a remote operation processing device capable of, by determining an image-pickup angle so that the image-pickup direction of an image-pickup device 322 is oriented to a target object to be visually confirmed by an operator, and controlling the image-pickup angle of the image-pickup device 322, obtaining an appropriate image-pickup field of view. A remote operation processing device 100 is a remote operation processing device 100 for supporting a remote operation of a working machine 300 using a remote operation device 200, the remote operation processing device 100 being capable of controlling the image-pickup angle of an image-pickup device 322 arranged in the working machine to be remotely operated, wherein the remote operation processing device 100 acquires positions of an attachment 344 included in the working machine 300 during work, stores the positions as target sets of coordinate values P, and controls the image-pickup angle of the image-pickup device 322 based on distribution of the target sets of coordinate values P.

## Description

### Technical Field

The present invention relates to a remote operation processing device for supporting a remote operation of a working machine using a remote operation device, and a remote operation processing system and, specifically, to a remote operation processing device capable of controlling the image-pickup angle of an image-pickup device included in the working machine, and a remote operation processing system.

### Background Art

As disclosed in Patent Literature 1, remotely operated working machines have been conventionally known. A remote drive device and an image-pickup device are attached to a working machine of Patent Literature 1, and an operator remotely operates the working machine by a remote operation device installed in a place away from the working machine.

The operator remotely operates the working machine while looking at an image on an indoor camera at an operation seat of the working machine. There is, however, a problem that it is difficult for the operator to grasp a sense of actual depth at a working site from an image of the indoor camera. Therefore, there is disclosed a device that is devised so that, by providing a camera on an upper part of a cabin of a working machine, an image from the upper part of the cabin can be visually confirmed.

### Citation List

### Patent Literature

Patent Literature 1: Japanese Patent Laid-Open No. 2007-16403

### Summary of Invention

### Technical Problem

The cabin height, however, differs according to types of working machines, and, therefore, it is necessary to adjust the image-pickup angle of a camera for each working machine. For this problem, in the invention described in Patent Literature 1, relationships between state quantities of an actuator of a working machine and complementary points to be included in the field of view of a camera are stored in advance, and the image-pickup direction of the camera is adjusted, with the state quantity of the actuator as a parameter. It is, however, necessary to check the relationships between the state quantities of an actuator of a working machine and the complementary points to be included in the field of view of a camera, for each working machine and store the relationships in advance, which requires much time. Further, the field of view of the camera determined based on the stored state quantities of the actuator is not necessarily always an appropriate image-pickup field of view for an operator.

An object of the present invention is to provide a remote operation processing device capable of, by determining an image-pickup angle so that the image-pickup direction of an image-pickup device is oriented to a target object to be visually confirmed by an operator, and controlling the image-pickup angle of the image pickup device, easily obtaining an appropriate image-pickup field of view to be visually confirmed by the operator, and a remote operation processing system.

### Solution to Problem

A remote operation processing device according to the present invention is a remote operation processing device for supporting a remote operation of a working machine using a remote operation device, the remote operation processing device being capable of controlling an image-pickup angle of an image-pickup device arranged in the working machine to be remotely operated, and the remote operation processing device acquires positions of an attachment during work, stores the positions as target sets of coordinate values, and controls the image-pickup angle of the image-pickup device based on distribution of the target sets of coordinate values.

### Brief Description of Drawings

FIG. 1 is an overview diagram showing a remote operation processing device according to the present invention.
FIG. 2 is an overview diagram showing a remote operation device.
FIG. 3 is a side view showing a working machine that is working.
FIG. 4 is a conceptual diagram showing positional relationships between target sets of coordinate values and representative sets of coordinate values in FIG. 3.
FIG. 5 is a top view showing the working machine that is working.

### Description of Embodiments

### [First embodiment]

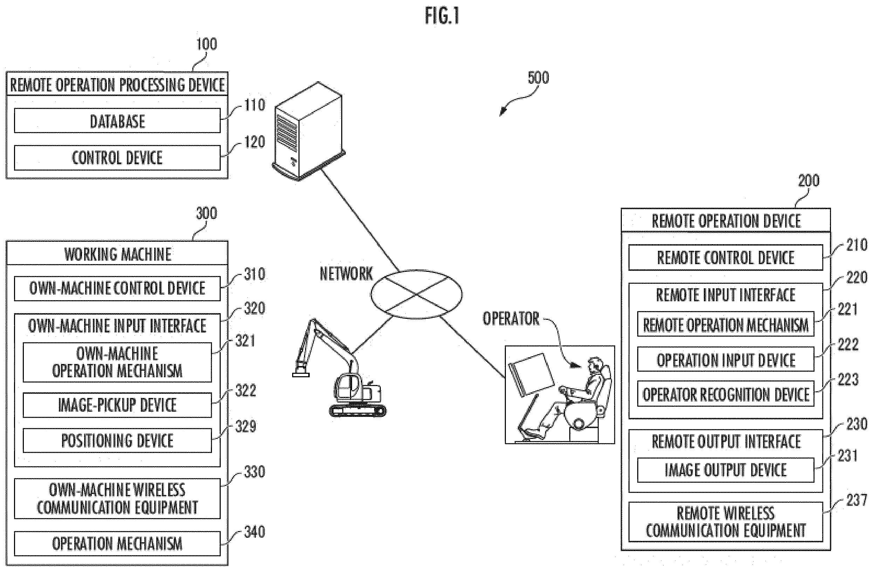

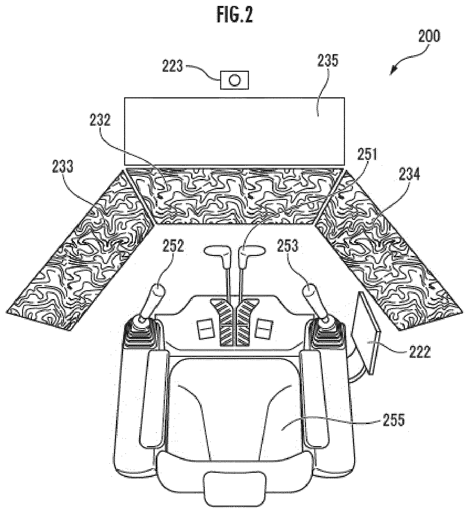

A remote operation processing device according to a first embodiment of the present invention will be described with reference to FIGS. 1 and 2. FIG. 1 is an overview diagram showing the whole of a remote operation processing system 500 that includes a remote operation processing device 100 of the present invention. FIG. 2 is an overview diagram of a remote operation device 200 included in the remote operation processing system 500. The remote operation processing system 500 comprises the remote operation processing device 100 and the remote operation device 200 for remotely operating a working machine 300. In the remote operation processing system 500, the remote operation processing device 100 may be provided in the remote operation device 200 or in the working machine 300. Or alternatively, the remote operation processing device 100 may be provided as a single body, for example, as a server. The description below will be made on a case where the remote operation processing device 100 is provided as a single body.

The remote operation device 200 and the working machine 300 are configured to be capable of mutually performing network communication. When the remote operation processing device 100 is provided as a single body, the remote operation processing device 100 is configured to be capable of mutually performing network communication with the remote operation device 200 and the working machine 300.

The remote operation processing device 100 comprises a database 110 and a control device 120. The database 110 stores and holds various kinds of data related to remote operation support, such as picked-up images, various kinds of characteristic values showing operation states of the working machine, various kinds of data about operators, and the like. The control device 120 is configured with an arithmetic processing device (a single-core processor, a multi-core processor, or a processor core constituting the processor), reads necessary data and software from a storage device such as a memory, and executes predetermined arithmetic processing for the data according to the software. The database 110 may be configured with a database separate from the remote operation processing device 100.

### <Configuration of working machine 300>

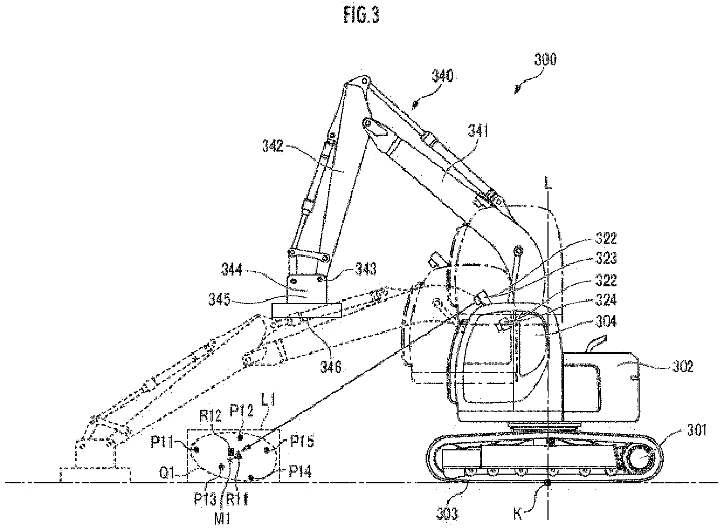

The working machine 300 to be remotely operated will be described with reference to FIG. 3. FIG. 3 is a side view showing the working machine 300 that is working. Though the description will be made on a case where a lifting magnet machine that adsorbs iron scraps and moves is used as the working machine 300 in the present embodiment, the type of the working machine 300 to which the present invention is applicable is not limited. The working machine 300 may be any working machine, for example, a power shovel the attachment of which is a bucket, a grabbing machine the attachment of which is a grabbing tool, a cutting machine the attachment of which is a cutting tool, a crushing machine the attachment of which is a crushing tool, or a breaker machine the attachment of which is a breaker.

The working machine 300 comprises a lower-part traveling body 301 having a crawler track 303 for traveling, which covers wheels, and an upper-part rotating body 302 that is rotatably mounted on the lower-part traveling body 301. The working machine 300 further comprises a cabin 304 provided on the upper-part rotating body 302, a boom 341 provided on the upper-part rotating body 302, an arm 342 connected to the tip of the boom 341, and an attachment 344 connected to the tip of the arm 342, being attached with an attachment pin 343.

The working machine 300 comprises an own-machine control device 310, an own-machine input interface 320, own-machine wireless communication equipment 330, and an operation mechanism 340.

The own-machine control device 310 is configured with an arithmetic processing device (a single-core processor, a multi-core processor, or a processor core constituting the processor), reads necessary data and software from a storage device such as a memory, and executes predetermined arithmetic processing for the data according to the software.

The own-machine input interface 320 comprises an own-machine operation mechanism 321, an image-pickup device 322, and a positioning device 329. The own-machine operation mechanism 321 comprises a plurality of operation levers that are arranged around a seat 255 arranged inside the cabin 304. A drive mechanism or robot is provided which receives a signal corresponding to an operation of a remote operation lever and moves an own-machine operation lever based on the received signal.

The image-pickup device 322 has a first camera 323 provided outside the cabin 304 and a second camera 324 provided inside the cabin 304. The first camera 323 is provided, for example, in the front center on the roof of the cabin 304. The second camera 324 is arranged inside the cabin 304 and provided near the headrest of the seat 255. The second camera 324 picks up an image of an environment that includes at least a part of the operation mechanism 340 through a front window and a pair of left and right side windows.

The first camera 323 is held, being unrotatable in the horizontal direction relative to the cabin 304, and adjustment of the image-pickup direction of the first camera 323 can be performed only in upward/downward directions. The image-pickup direction of the first camera 323 before adjustment of the angle is set to a default value. The default value of the image-pickup direction of the first camera 323 is, for example, an angle 40° below the horizontal plane. The present invention is applicable not only to the first camera 323 arranged outside the cabin 304 but also to other cameras such as the second camera 324 arranged inside the cabin 304.

The first camera 323 may be provided on an almost vertical outer surface on the front face, left-side face, or right-side face of the cabin 304. Further, two or more first cameras 323 may be provided. For example, one first camera 323 may be provided on each of the left and right sides of the front part on the roof of the cabin 304, respectively. Or alternatively, first cameras 323 may be provided on two or more faces among the front face, the left-side face, or the right-side face of the cabin 304, for example, on the left-side and right-side faces of the cabin 304, respectively.

Further, a plurality of first cameras 323 may be arranged at separate positions in left and right directions to obtain a stereo image using images picked up by the first cameras 323, respectively, and 3D glasses. An operator can grasp a sense of depth by visually confirming the stereo image.

As for a method for the operator to visually confirm the stereo image, a publicly known method can be used. For example, a method can be used in which the images from the plurality of first cameras 323 are displayed at the same time on a display device to be described later, being overlaid, and the operator uses 3D glasses that include polarization filters for left and right eyes, respectively. Or alternatively, a method can be used in which an image of a left-side first camera 323 and an image of a right-side first camera 323 are alternately switchedly displayed on the display device with a cycle of several times to dozens of times per second, and the operator uses 3D glasses that include liquid crystal shutters for left and right eyes synchronized with left or right images displayed on the display device. Or alternatively, a method can be used in which images from the plurality of first cameras 323 are at the same time displayed on the display device, being overlaid, and the operator uses a display that enables the operator to recognize a stereo image without glasses.

The positioning device 329 includes a GPS receiver and, when necessary, a gyro sensor and acquires the position of the working machine 300.

The working machine 300 comprises the own-machine wireless communication equipment 330. A picked-up image and position information acquired by the own-machine input interface 320 are transmitted to the remote operation device 200 by the own-machine wireless communication equipment 330 via the remote operation processing device 100 through a network.

### <Configuration of remote operation device 200>

The remote operation device 200 will be described with reference to FIGS. 1 to 3. FIG. 3 is a side view showing the working machine 300 that is working. The remote operation device 200 comprises a remote control device 210, a remote input interface 220, a remote output interface 230, and the seat 255.

The remote control device 210 performs control of the whole remote operation device 200, including control of each of the remote input interface 220, the remote output interface 230, and remote wireless communication equipment 237, and data input/output.

The remote input interface 220 comprises a remote operation mechanism 221, an operation input device 222, and an operator recognition device 223.

The remote operation mechanism 221 includes a traveling operation device, a rotating operation device, an arm operation device, a boom operation device, and an attachment operation device corresponding to the working machine 300. The remote operation mechanism 221 has a plurality of levers that are operated by a turning operation. In front of the seat 255, a pair of left and right travel levers 251 corresponding to left and right crawlers, respectively, are arranged side by side on the left and right. On both sides of the seat 255 for an operator to sit on, operation levers 252 and 253 are arranged.

Correspondences between the levers of the remote operation mechanism 221 and operations of the operation mechanism 340 of the working machine 300 will be described. The travel levers 251 of the traveling operation device is a lever for moving the lower-part traveling body 301 of the working machine 300. The operation lever 252 provided in front of the left-side frame of the seat 255 functions as an arm lever when operated in a forward/backward direction and functions as a rotation lever when operated in a left/right direction. The operation lever 253 provided in front of the right-side frame of the seat 255 functions as a boom lever when operated in a forward/backward direction and functions as an attachment lever when operated in a left/right direction. Positions and operation directions of the levers of the remote operation mechanism 221 corresponding to operations of the working machine 300 may be other than the operation patterns described above and may be appropriately changed by an operator's operation.

The operation input device 222 is fixed in front of the right side frame of the seat 255 via a fixation member so that an operator can easily perform an operation. The operation input device 222 is an in input device comprising a display unit that displays various kinds of information and an input unit making it possible to make various kinds of inputs. The input unit of the operation input device 222 is formed by one or more selected from among a touch panel type, a button type, a rotational type, and a sliding type. The display unit of the operation input device 222 is formed by a liquid crystal display device, an organic EL display device, an LED display device, or the like. The operation input device 222 is, for example, a touch panel type liquid crystal display device formed by overlaying a touch panel on a liquid crystal display device.

The operator recognition device 223 acquires an image, voice, a personal identification number, and the like to identify an operator individually. The operator recognition device 223 is provided on a front part of the remote operation device 200, toward the seat 255. After the remote operation device 200 starts up, the operator recognition device 223 picks up an image of an operator sitting on the seat 255. The operator recognition device 223 identifies an operator individually by face recognition, using the picked-up image.

Operator identification information may be stored in the database 110 of the remote operation processing device 100. Or alternatively, the operator identification information may be stored in a database constructed in a place other than the remote operation processing system 500 so that identification of an individual operator is performed via communication means. The stored operator identification information refers to pieces of operator identification information about one or more operators who can operate the working machine 300, such as images, personal identification numbers, and passwords for the operators. Acquired operator identification information is compared with one or more of the stored pieces of operator identification information to identify an operator individually.

The operator recognition device 223 is provided on the remote operation device 200 instead of an image pickup device, and it may be an operator information input device not shown that is for inputting a personal identification number and the like of an operator or may be both of an image pickup device and the operator information input device. The operator information input device may be a key input type device or may be a voice recognition device that has a microphone and recognizes the voice of an operator itself or a password specified for each operator.

As the stored information, heights of the operators and information at the time of working in the past acquired by the image pickup device of the operator recognition device 223 or the like can also be stored, in addition to the pieces of operator identification information described above. The information at the time of working in the past includes working postures during remote operations, working dates and time, and working places of all types of work, cumulative working hours of the working machine 300 up to the current time, and the like.

The remote output interface 230 comprises an image output device 231. The image output device 231 is a device that displays a picked-up image transmitted from the working machine 300. For example, as shown in FIG. 2, the image output device 231 comprises a central display device 232, a left-side display device 233, and a right-side display device 234, which have approximately rectangular display screens and are arranged in front of, diagonally forward to the left of, and diagonally forward to the right of the seat 255, respectively, and an upper part display device 235 arranged above and adjacent to the central display device 232. The shapes and sizes of image display areas of the central display device 232, the left-side display device 233, the right-side display device 234, and the upper part display device 235 are the same.

There may be not one but a plurality of upper part display devices 235 that are arranged in the horizontal direction similarly to the central display device 232, the left-side display device 233, and the right-side display device 234. Or alternatively, the central display device 232, or the central display device 232 and the upper part display device 235, which are frequently visually confirmed, may be larger than the left-side display device 233 and the right-side display device 234.

Each of the screens of the central display device 232, the left-side display device 233, and the right-side display device 234 may be parallel to the vertical direction or may be tilted relative to the vertical direction. At least one of the central display device 232, the left-side display device 233, and the right-side display device 234 may be configured with a plurality of divided image output devices. For example, the central display device 232 may be configured with a pair of image output devices with approximately rectangular screens which are vertically adjacent to each other.

A description will be made on a procedure for, in the remote operation processing device 100 of the present invention, determining an image-pickup angle (or an optical axis direction) of the image-pickup device 322 provided on the working machine 300. The remote operation processing device 100 calculates and stores a target set of coordinate values P using coordinate values expressed in an own-machine coordinate system with a reference point of the working machine 300 as an origin K. The reference point of the working machine 300, which is the origin K of coordinates can be appropriately determined. For example, an intersection point between a rotation axis line L of the upper-part rotating body 302 and a plane M that includes the bottom face of the crawler track 303 covering the wheels of the lower-part traveling body 301, that is, the ground is set as the origin K of the own-machine coordinate system.

As coordinate axes, an X axis, a Y axis, and a Z axis are arranged in directions parallel to the left/right direction, forward/backward direction, and upward/downward direction of the working machine 300, respectively, with the origin K as the center. The left, forward, and upward directions of the X, Y, and Z axes are set to represent positive, and the right, backward, and downward directions are set to represent negative. The working machine 300 is capable of detecting a position by the positioning device 329 and always detects a global position of the working machine 300. Coordinate values defined in the own-machine coordinate system may be converted to a global position on a map, that is, to coordinate values in an absolute position coordinate system and stored, being linked with the position of the working machine 300.

The remote operation processing device 100 automatically stores positions of a particular part of the attachment 344 from start to end of work as points represented by three-dimensional coordinates, that is, target sets of coordinate values P and creates a heatmap representing the density of target sets of coordinate values P. The remote operation processing device 100 identifies an area where the density of target sets of coordinate values P is high based on the heatmap and determines an image-pickup direction. A procedure therefor will be described below.
(1) Automatically acquire positions of the attachment 344 that is working and store the positions as target sets of coordinate values P and create a heatmap representing the density of target sets of coordinate values P.
(2) Identify an area where the density of the stored target sets of coordinate values P is high.
(3) Control the image-pickup angle of the image-pickup device to be oriented toward the identified area where the density of target sets of coordinate values P is high.

FIG. 3 shows a lifting magnet machine as the working machine 300. The working machine 300 is configured to be capable of detecting the state quantities of the units of the working machine 300, including the state quantity of the operation mechanism 340. The state quantities of the units of the working machine 300 are, for example, a rotation angle of the upper-part rotating body 302 relative to the lower-part traveling body 301, and angles of the boom 341 and the arm 342 from reference positions. Further, the state quantities of the units of the working machine 300 are a rotation angle position relative to the longitudinal direction of the arm 342 of the attachment 344, with the attachment pin 343 as the center of rotation (for example, an angle position of a shovel machine relative to the longitudinal direction of the arm 342 of the bucket of a shovel machine), a rotation angle of the attachment 344 (for example, two sandwiching tools of a grabbing machine), with the longitudinal direction axis line of the arm 342 of the attachment 344 as the center of rotation, an opening angle between the sandwiching tools, and the like.

The lengths of and a connection position between the boom 341 and the arm 342, and the shape of the attachment 344 are accurately grasped in advance. Therefore, the remote operation processing system can acquire coordinates of the particular part of the attachment 344 based on the state quantities of the boom 341, the arm 342, and the attachment 344 that are working, and the position of the particular part of the attachment 344 from the tip of the arm 342. Acquired coordinate values of the particular part of the attachment 344 are stored as a target set of coordinate values P (x, y, z).

The particular part of the attachment 344 is selected according to the shape of the attachment 344 as shown below. If the working machine 300 is a lifting magnet machine comprising a magnet portion 345, the particular part of the attachment 344 is, for example, a central part of a bottom face portion 346, which is an adsorptive surface of the magnet portion 345. If the working machine 300 is a shovel machine, the particular part of the attachment 344 is, for example, a central part of a claw portion at the tip of the bucket, in a width direction, that is, in a left/right direction, or a central part of an opening portion of the bucket. If the working machine 300 is a grabbing machine with a pair of sandwiching tools, a cutting machine, or a crushing machine, the particular part of the attachment 344 is, for example, a tip part or a central part in a length direction when the two sandwiching tools are in a closed state. If the working machine 300 is a breaker machine with a breaker, the particular part of the attachment 344 is, for example, a tip part of the breaker.

The particular part of the attachment 344 can be a central part of the attachment pin 343 for attaching the attachment 344 in a longitudinal direction, that is, in a left/right direction, regardless of the type of the attachment 344. If the attachment pin 343 is set as the particular part of the attachment 344, the above-described position of the attachment 344 is stored as the particular part in common, regardless of the type of the attachment 344 that is changed according to work content.

The position of the attachment 344 that is working is automatically acquired by the remote operation processing device 100 at predetermined time intervals. For example, the remote operation processing device 100 automatically acquires the position of the attachment 344 every five seconds, ten seconds, twenty seconds, or thirty seconds, or every minute. In addition, the remote operation processing device 100 can acquire the position of the particular part of the attachment 344 when the attachment 344 performs particular work. The particular work is work at the time of adsorbing and releasing material with a lifting magnet machine, at the time of hitting a breaker with a breaker machine, at the time of the attachment 344 approaching the ground surface, at the time of a lever operation amount changing from a predetermined first operation amount to a predetermined second operation amount larger than the first operation amount, at the time of the lever operation amount becoming equal or larger than a predetermined operation amount, at the time of a lever operation speed becoming equal to or higher than a specified speed, or the like. In the above working states, the remote operation processing device 100 automatically acquires the position of the particular part of the attachment 344. An operator can set which of the above is to be a method for acquiring the position of the attachment 344.

The remote operation processing device 100 stores target sets of coordinate values Pn and related information associated with the target sets of coordinate values Pn. At and after the points of time when the target sets of coordinate values Pn and the related information are stored, the remote operation processing device 100 is used to control an image-pickup direction based on the stored target sets of coordinate values Pn and related information. The related information is information that includes one or more pieces of information among information about an operator including physical characteristics or a working posture, information about a working date and time, and a working place, information about the working machine, and information about work content.

The information about an operator includes information identifying the operator individually. Since the height and the working posture at the time of sitting, that is, a sitting posture, for example, a posture of leaning forward or a posture with the upper body straight are different according to operators, identification of an operator individually is reflected on adjustment of the image-pickup device 322. The information about a working date and time, and a working place includes a date and time when a target set of coordinate values Pn was acquired and a place detected by the positioning device 329 when the target set of coordinate values Pn was acquired. The related information about the working machine includes the type, size, and machine number of the working machine 300, and information identifying an attachment, such as the type of the attachment 344 that is fitted.

The related information about work content is information indicating each state quantity of the operation mechanism 340 of the working machine 300 at the time of the related information being stored, one or more working states such as a rotation angle of the upper-part rotating body 302 of the working machine 300 relative to a reference position. Furthermore, the remote operation processing device 100 stores work content identified based on state quantities of the operation mechanism 340 stored in advance, based on the state quantities of the operation mechanism 340. For example, the remote operation processing device 100 stores work content, such as excavation work, loading work, lifting magnet work, breaker work, and the like.

The remote operation processing device 100 creates a heatmap showing the density of target sets of coordinate values P in a work space, based on a stored plurality of target sets of coordinate values P.

After creating the heatmap, the remote operation processing device 100 identifies an area where the density of target sets of coordinate values P is high. A work space around the working machine 300 is divided in a plurality of unit spaces L of a predetermined size. The unit space L is an area where, in the work space around the working machine 300, each of X, Y, and Z directions is defined within a predetermined range. The predetermined range is, for example, a length corresponding to 50 to 100% of the largest dimension among the three-direction dimensions of the attachment 344 used by the working machine 300.

The remote operation processing device 100 counts the number of target sets of coordinate values P included in each unit space L and identifies a unit space L with the highest density of target sets of coordinate values P. A method for identifying the unit space L with the highest density is, for example, a method of identifying a unit space L with the largest number of target sets of coordinate values P. Or alternatively, the method is a method of identifying such unit spaces L that include a predetermined number or more of target sets of coordinate values P, specifically, five or more, ten or more, twenty or more, or the like. When a plurality of unit spaces L is identified as in the latter method, an operator can select any of the unit spaces.

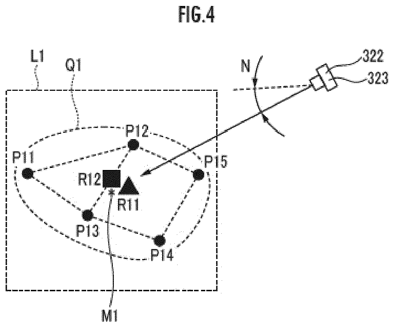

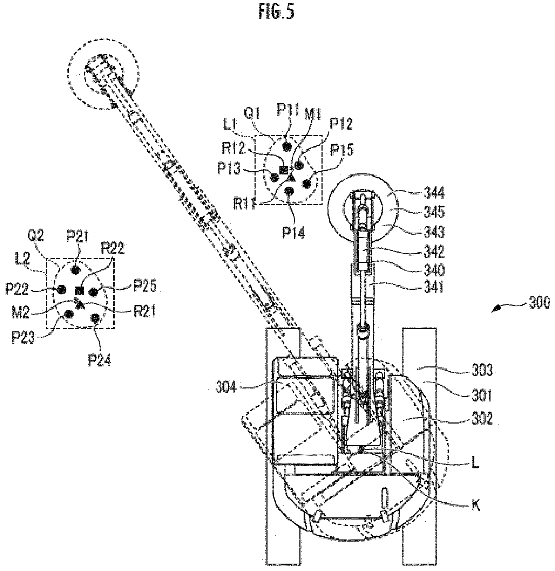

The target sets of coordinate values P will be described with reference to FIGS. 3 to 5. FIG. 3 shows an identified unit space L1 and target sets of coordinate values P11 to P15 included in the unit space L1. FIG. 4 is an enlarged view of FIG. 3. FIG. 5 is a top view of the working machine 300 of FIG. 3 and shows unit spaces L1 and L2. While the working machine 300 is working, coordinate values of positions of the particular part of the attachment 344 are calculated and stored as target sets of coordinate values Pn. Here, n in a target set of coordinate values Pn (xn, yn, zn) is a natural number (1, 2, 3, ...). For example, a first target set of coordinate values P and a second target set of coordinate values P are stored, being distinguished as (x1, y1, z1) and (x2, y2, z2), respectively.

The remote operation processing device 100 sets an area with a high density of target sets of coordinate values P as an image-pickup direction and controls the image-pickup angle of the image-pickup device 322 to be oriented in the direction by an operator operation. The remote operation processing device 100 causes the image pickup direction of the image-pickup device 322 to be oriented, for example, to spatial center coordinates M1 of the unit space L1. When there is a plurality of unit spaces L with a high density of target sets of coordinate values P, the remote operation processing device 100 displays the unit spaces L on a display device of the remote operation device 200, and the operator can select any of them.

The operator gives an instruction to start adjustment of the image-pickup angle of the first camera 323 by a switch operation of an OK button or the like not shown, which is provided on the remote operation device 200. In response to the instruction, the remote operation processing device 100 transmits an image-pickup angle adjustment command to the working machine 300. The working machine 300 receives the command via the own-machine wireless communication equipment 330, and a holding mechanism of the first camera 323, which is not shown, adjusts the image-pickup angle of the first camera 323 to a specified angle N. If the operator gives an instruction not to start the image-pickup angle adjustment while the above display is shown, or the operator does not perform an operation to start the image-pickup angle adjustment for a predetermined time, then the image-pickup angle adjustment is not performed. Thus, the image-pickup direction of the first camera 323 is adjusted to the image-pickup angle N by an operator operation.

Further, the operator can modify the calculated image-pickup angle N of the image-pickup device 322 to adjust the image-pickup device 322. On a display unit of the image output device 231 or the operation input device 222, an image showing acquired target sets of coordinate values Pn as in FIG. 5 are displayed as guidance for modification. The remote operation processing device 100 gives guidance for adjusting the image-pickup direction of the image-pickup device 322 with a calculated image-pickup direction, by such display. A sentence for confirming with the operator whether adjustment of the image-pickup angle N of the first camera 323 is to be started or not is also displayed together with the image described above. The operator can adjust the image-pickup angle N of the image-pickup device 322 using the touch panel of the operation input device 222 or a switch not shown, looking at the displayed image of the image-pickup device 322. The remote operation processing device 100 stores the adjusted image-pickup angle N and the target sets of coordinate values P.

A description will be made on use of the target sets of coordinate values P and the related information about the target sets of coordinate values P that are stored in the remote operation processing device 100. As described above, the remote operation processing device 100 stores the information about operators, the information about working dates and time and working places, the information about the working machine, and the information about work content. The remote operation processing device 100 detects current related information, reads target sets of coordinate values P associated with the related information from the database 110, and creates a heatmap. As for the detection of the related information, if the remote operation processing device 100 detects stored related information with a condition corresponding to that of the current work, for example, the same operator or the like, it is possible to call target sets of coordinate values P stored in association with the related information to adjust the image-pickup angle of the image-pickup device 322.

For example, the remote operation processing device 100 can use related information stored in association with an identified operator. For example, when the same operator that worked in the past works, the remote operation processing device 100 can refer to a work history of the same operator in the past, and call target sets of coordinate values P that were stored during the work of the operator to adjust the image-pickup angle of the image-pickup device 322. Therefore, the remote operation processing device 100 can reflect differences according to operators, such as height difference and working posture difference, to adjust the image-pickup angle of the image-pickup device 322.

Since there is a tendency that the cabin height of the working machine 300 also increases as the size of the working machine 300 increases, it is preferred to change the image-pickup angle according to a machine size. Therefore, the remote operation processing device 100 can call the image-pickup angle of the same machine size that is stored, or of a combination of the same machine size and the same attachment 344 and call target sets of coordinate values P to adjust the image-pickup angle of the image-pickup device 322. Further, when the same work content is implemented by the same working machine 300, the remote operation processing device 100 can call target sets of coordinate values P of the same work content, which are stored, to adjust the image-pickup angle of the image-pickup device 322. For example, the remote operation processing device 100 can call stored target sets of coordinate values P for work content, such as excavation work, loading work, lifting magnet work, or breaker work, to adjust the image-pickup angle of the image-pickup device 322. Further, it is possible to call a stored image-pickup angle or stored target sets of coordinate values P in the same time range in the past, for example, it is possible to call, between 13:00 and 15:00, an image-pickup angle in the same time range in the past, and call, between 15:00 and 17:00, target sets of coordinate values Pin the same time range in the past, and adjust the image-pickup angle of the image-pickup device 322. Thus, the remote operation processing device 100 can efficiently adjust the image-pickup angle of the image-pickup device 322 based on related information stored with target sets of coordinate values P. As for a combination of conditions, such as an operator and a machine size, to be a key at the time of calling target sets of coordinate values P in the past, an operator can set the combination via the remote operation device 200.

Stored target sets of coordinate values Pn can be deleted by a predetermined operator operation. Target sets of coordinate values Pn are stored in association with an operator, and the operator can delete the target sets of coordinate values Pn stored during work by the operator.

### <Correction of image-pickup angle in the case of raising cabin>

FIG. 3 shows the cabin 304 in a plurality of states by broken lines, the relative position of the cabin 304 having changed relative to the lower-part traveling body 301, in a case where the cabin 304 is a raising cabin. A relative position of the cabin 304 of the working machine 300, that is, an operation room can be adjusted relative to the lower-part traveling body 301 of the working machine 300. When the working machine 300 has a raising cabin, the operation room moves in an arc shape in the upward/downward direction while also moving in the forward/backward direction. Even if the relative position of the operation room relative to the lower-part traveling body 301 changes, the remote operation processing device can control at least one of the image-pickup angle of the image-pickup device 322 and the position relative to the cabin 304 so that the image-pickup direction of the image-pickup device 322 attached to the cabin 304 is oriented to a representative set of coordinate values R.

The relative position of the cabin 304 relative to the lower-part traveling body 301 can be detected. The remote operation processing device detects a forward/backward position and an upward/downward position after the cabin 304 has moved, from the image-pickup angle of the image-pickup device 322 calculated when the cabin 304 is at a reference position, which is a normal position, for example, the lowest-end and most rear-end position, and corrects at least one of the image-pickup angle of the image-pickup device 322 and the position relative to the cabin 304. The remote operation processing device can transmit a control signal for adjusting the image-pickup angle of the image-pickup device 322 and the position relative to the cabin 304 that have been corrected, to the working machine 300.

### [Second embodiment]

Next a second embodiment according to the present invention will be described. The second embodiment is different in that acquisition of a target set of coordinate values P is performed by a direct acquisition operation by an operator and in a calculation method for determining the image-pickup direction of the image-pickup device 322, and is the same in other points. The method of the second embodiment in which a target set of coordinate values P is acquired by a direction acquisition operation by an operator can be implemented in combination with the method of the first embodiment in which a target set of coordinate values P is automatically acquired.

Determination of the image-pickup direction of the first camera 323 is performed in the following procedure.
(1) Specification of a target object and calculation of target sets of coordinate values P by predetermined operator operations
(2) Grouping of a predetermined number of target sets of coordinate values P selected in association with positions of the target sets of coordinate values P
(3) Determination of a representative set of coordinate values R based on the predetermined number of target sets of coordinate values P, to which the image-pickup device 322 is to be oriented

### (1) Specification of a target object and calculation of target sets of coordinate values P by predetermined operator operations

The remote operation processing device calculates a target set of coordinate values P of a specified target object at the point of time when an operator performs a predetermined operation and stores the target set of coordinate values P together with related information. Since work by the working machine 300 is performed by operating the attachment 344, it is especially necessary to confirm the attachment 344 and surroundings thereof as target objects to be visually confirmed by the operator. Therefore, the remote operation processing device 100 acquires the position of the particular part of the attachment 344 at the point of time when the operator performs a predetermined operation, as the position of a target object to be visually confirmed by the operator, and determines and stores a target set of coordinate values P thereof. Each time the operator performs the predetermined operation, the remote operation processing device 100 stores coordinate values of the particular part of the attachment 344 included in the working machine 300, as a target set of coordinate values P.

The predetermined operator operation is, for example, an operation of a switch provided on the remote operation device 200. A switch for specifying a target object to be visually confirmed is provided, for example, on the operation lever 252 or 253, the touch panel of the operation input device 222, an armrest of the seat 255, an operation panel at the operation seat of the working machine 300, or the like. Or alternatively, instead of the switch operation described above, a particular operation of the operation lever 252 or 253 may be the predetermined operator operation. In actual work, the frequency of visually confirming a position near the ground surface for adsorption of iron scraps, ground excavation, and the like is thought to be high. Therefore, for example, at the time of detecting an operation of the operation lever 252 or 253 for causing the attachment 344 to approach the ground surface to be at a position close to the ground surface, it can be judged that the predetermined operator operation has been performed. More specifically, the time when a lever operation amount changes from a predetermined first operation amount to a second operation amount larger than the first operation amount, the time when the lever operation amount becomes equal to or larger than a predetermined operation amount, the time when a lever operation speed becomes equal to or higher than a specified speed, or the like may be detected to judge that the predetermined operator operation has been performed.

As the predetermined operator operation, the following modifications may be applied instead of the switch operation described above. The predetermined operator operation may be performed by a voice method using a voice recognition device not shown, which recognizes a particular voice uttered by the operator. In the voice method, the position of the particular part of the attachment 344 at the time when a particular word, for example, "acquire", "record", or the like is uttered. That is, uttering a particular word has an effect equal to the effect of the switch operation described above. Or alternatively, the predetermined operator operation may be a method of displaying a picked-up image of the first camera 323 or the second camera 324 on the display unit of the operation input device 222 and touching the touch panel with a finger to directly specify a target obj ect to be visually confirmed. The predetermined operator operation may be any one of the switch operation, the voice recognition, and the operation of the touch panel of the operation input device 222, or a combination of two or more of them.

Calculation of target sets of coordinate values Pn will be described with reference to FIGS. 3 to 5. FIG. 4 is a conceptual diagram showing the working machine 300 and positional relationships between a group Q1 that includes stored plurality of target sets of coordinate values Pn and representative sets of coordinate values R. FIG. 5 is a top view of the working machine 300 of FIG. 3. Each time an operator performs the predetermined operator operation once, a target object is specified, and coordinate values thereof are calculated and stored as a target set of coordinate values Pn. Here, n in the target set of coordinate values Pn (xn, yn, zn) is a natural number (1, 2, 3, ...). The target sets of coordinate values Pn are distinguished and stored, for example, like a target set of coordinate values P1 (x1, y1, z1) in the case of the first operation and a target set of coordinate values P2 (x2, y2, z2) in the case of the second operation. The target sets of coordinate values Pn are stored being associated with pieces of related information corresponding thereto, respectively.

### (2) Selection related to positions of target sets of coordinate values P and grouping of target sets of coordinate values P

A predetermined number of target sets of coordinate values Pn are selected from among the stored plurality of target sets of coordinate values Pn and are grouped as one group Qn. For example, Q1 includes five target sets of coordinate values Pn from target sets of coordinate values P1 (x1, y1, z1) to target sets of coordinate values P5 (x5, y5, z5). One target set of coordinate values Pn is stored by one operator operation. Therefore, the group Qn may include not a plurality of target sets of coordinate values Pn but one set. Therefore, the group Qn in the present specification is assumed to be a set that includes one or more target sets of coordinate values Pn. The predetermined number of target sets of coordination values Pn is, for example, one to nine, and is preferably, for example, five. The representative set of coordinate values R, which is a target the first camera 323 is to be oriented to, is determined more accurately as the predetermined number is larger, while calculation time at the time of determining the representative set of coordinate values R can be shorter as the predetermined number is smaller.

The predetermined number of target sets of coordinate values Pn are selected from among a plurality of target sets of coordinate values Pn, the number of the target sets of coordinate values Pn being at least one or more larger than the predetermined number. In a predetermined method for selecting the target sets of coordinate values Pn, the target sets of coordinate values Pn are selected, for example, so that the volume of closed space demarcated on the basis of the predetermined number of target sets of coordinate values Pn is the smallest. The method may be any method. For example, by selecting target sets of coordinate values Pn the distance between which is the shortest, that is, target sets of coordinate values Pn that are the closest from among a stored plurality of target sets of coordinate values Pn, and repeating selection of a target set of coordinate value Pn that is the second closest to any of them, the predetermined number, for example, five target sets of coordinate values Pn are selected. Then, the volume of closed space formed with each of the selected target sets of coordinate values Pn as a vertex. By repeating this method for all the stored target sets of coordinate values Pn, the predetermined number of target sets of coordinate values Pn forming closed space with the smallest volume, with each of the target sets of coordinate values Pn as a vertex, are selected.

As a method for determining the volume of the closed space, the following method may be adopted instead of the above method. The volume of the closed space may be determined by, on the assumption that the closed space is a combined form constituted by a plurality of partial solid bodies, determining the volumes of the solid bodies and adding up the volumes. Or alternatively, the volume may be determined by subtracting, from a volume determined by regarding the closed space as one solid object with a shape similar to a triangular pyramid, a quadrangular pyramid, a rectangular parallelepiped, or a sphere, volumes of unnecessary parts that are partially calculated. Or alternatively, the volume may be approximately determined by determining a radius of the smallest sphere that includes all the selected target sets of coordinate values Pn and calculating the volume of the sphere.

### (3) Determination of a representative set of values to which the image-pickup device is to be oriented

FIG. 4 shows the group Q1 that includes the target sets of coordinate values P1 to P5, and representative sets of coordinate values R1 and R2. After the group Qn is determined, the representative set of coordinate values Rn, which is a target to which the first camera 323 is to be oriented, is determined based on a predetermined number of target sets of coordinate values Pn included in the group Qn.

The representative set of coordinate values R (x, y, z) is a target to which the image-pickup direction of the first camera 323 is to be oriented, and is a point on the image-pickup direction line of the first camera 323. The representative set of coordinate values R is determined in such a method that the target sets of coordinate values P1 to P5 included in the group Qn are included in the image-pickup field of view as far as possible. The representative set of coordinate values R is determined, for example, as the position of the gravity center of a solid body with the predetermined number of target sets of coordinate values Pn included in the group Qn as vertexes. The position of the gravity center of the solid body with the target sets of coordinate values Pn as the vertexes is, for example, a three-dimensionally middle position among X coordinate values of the target sets of coordinate values Pn, among Y coordinate values, and among Z coordinate values, and is determined as average values of the X coordinate values, the Y coordinate values, and the Z coordinate values, respectively. Specifically, the position of the gravity center of the target sets of coordinate values Pn is calculated by the following formula. FIG. 4 shows a representative set of coordinate values R11 determined by this method.
X coordinate value of position of gravity center=(x1+x2+...+xn)/n
Y coordinate value of position of gravity center=(y1+y2+...+yn)/n
Z coordinate value of position of gravity center=(z1 +z2+...+zn)/n

As a method for determining the representative set of coordinate values R, the following method may be adopted instead of the above method. For example, a method is also possible in which, among the predetermined number of target sets of coordinate values Pn included in the group Qn, average values, that is, intermediate coordinate values of only target sets of coordinate values Pn at two points that are mutually closest are determined and set as the representative set of coordinate values R2. FIG. 4 shows a representative set of coordinate values R12 determined by this method. In comparison with the first method, this method has an advantage of shortening the calculation speed by being a simple method though it has a disadvantage of the accuracy of the position of the representative set of coordinate values R being decreased.

Since, when the number of target sets of coordinate values Pn is three or fewer, it is not possible to form a solid body with the target sets of coordinate values Pn as vertexes, the following method may be adopted. When there is one target set of coordinate values Pn, the one may be set as the representative set of coordinate values R. When the number of stored target sets of coordinate values Pn is two or three, the set of the two or three is grouped as one group Qn, and coordinate values of a center point of a line connecting the two or the position of the gravity center of a figure with the three as vertexes may be set as the representative set of coordinate values R.

From the representative set of coordinate values R1 determined by the procedure (1), (2), or (3) described above and already known coordinate values of the first camera 323, the image-pickup angle N at which the first camera 323 is oriented toward the representative set of coordinate values R1 is calculated. After the image-pickup angle N is calculated, the remote operation device 200 displays information about the determination of the image-pickup angle N on the display unit of the image output device 231 or the operation input device 222. The information displayed at that time includes that the image-pickup angle N at which the first camera 323 is to be oriented to a target object has been determined, and one or more among the angle N, the representative set of coordinate values R1, and coordinate values in the image-pickup field of view (for example, center coordinate values in the image-pickup field of view) of the first camera 323 at the current point of time (before adjustment). Further, an image showing the acquired target sets of coordinate values Pn like FIG. 5 is also displayed on the display unit. By such display, guidance is given about whether the calculated image-pickup direction of the first camera 323 is to be adjusted. A sentence for confirming with an operator whether adjustment of the image-pickup angle N of the first camera 323 is to be started or not is also displayed together with the above information.

When the operator gives an instruction to start adjustment of the image-pickup angle of the first camera 323 by a switch operation of the OK button or the like not shown, which is provided on the remote operation device 200, the remote operation device 200 transmits an image-pickup angle adjustment command to the working machine 300. The working machine 300 receives the command via the own-machine wireless communication equipment 330, and the holding mechanism of the first camera 323, which is not shown, adjusts the image-pickup angle of the first camera 323 to the specified angle N. If, the operator gives an instruction not to start the image-pickup angle adjustment while the above display is shown, or the operator does not perform an operation to start the image-pickup angle adjustment for a predetermined time, then the image-pickup angle adjustment is not performed. Thus, the image-pickup direction of the first camera 323 is adjusted to the image-pickup angle N specified by the operator, at which the first camera 323 is oriented to a target object.

### <Determination of group Qn for each of different working time ranges and for each of particular working states>

A description has been made above on one work execution position at which the working machine 300 works. In actual work, however, there may be two or more working positions at which the attachment 344 is working. Each of a lifting magnet machine, a shovel machine, and the like performs work, moving the attachment 344 between a position to take up iron scraps or soil and a position to drop the iron scraps or soil. Further, as the work progresses, each working position may move. Therefore, it is preferable to be able to specify target sets of coordinate values Pn and determine a group Qn at least either for each of different working time ranges or for each of particular work states. Thereby, it is possible to, for each of working time ranges, for example, between 13:00 and 15:00, or between 15:00 and 17:00, control the image-pickup angle to an image-pickup angle in the same working time range in the past.

In the remote operation processing device of the present invention, at the time of storing target sets of coordinate values Pn, the target sets of coordinate values Pn are classified according to different working time ranges and according to particular working states, using related information stored at the same time, as related information. Specifically, the remote operation processing device classifies all the stored target sets of coordinate values Pn according to different working time ranges, using dates and time of acquisition of the target sets of coordinate values P. The remote operation processing device divides working time into working time ranges at regular time intervals, for example, every four hours, every eight hours, every twelve hours, every day, or every two days from a current point of time, classifies the target sets of coordinate values Pn according to working time ranges, and determines a group Qn (n is a natural number) for each working time range.

Further, the remote operation processing device classifies all the stored target sets of coordinate values Pn according to particular working states, using state quantities of the working machine 300 at the time points of acquisition of the target sets of coordinate values Pn. The remote operation processing device divides a work area where the working machine 300 is working into predetermined area units, using any one or more of pieces of related information at the time points of acquisition of the target sets of coordinate values Pn, such as places of detection by the positioning device 329, state quantities of the operation mechanism 340 of the working machine 300, and rotation angles relative to the reference position of the upper-part rotating body 302 of the working machine 300. The predetermined area unit is determined in advance for each working machine 300 or for each work content so as to be such a minimum range that the position to take up iron scraps, soil, or the like and the position to drop the iron scraps, soil, or the like described above can be distinguished.

As a modification of the above method, the method for classifying target sets of coordinate values Pn according to particular working states may be, for example, a method in which an angle range area is divided into certain rotation angle ranges in the rotation direction of the upper-part rotating body 302 relative to the lower-part traveling body 301, and target sets of coordinate values Pn are classified according to the angle range areas. For example, the rotation direction of the upper-part rotating body 302 can be divided into 5° rotation angle ranges. The forward direction of the working machine 300 is set as 0°, and the entire circumference can be divided in 5° rotation angle ranges in both of left and right directions of a rotation angle range of 0°±2.5° as a center. The rotation angle range for dividing the area may be 2.5°, 7.5°, 10°, or 15°.

FIG. 5 shows a group Q1 including target sets of coordinate values P11 to P15 and a group Q2 including target sets of coordinate values P21 to P25, which are stored according to different working time ranges or according to particular work states. Thus, the remote operation processing device can classify all stored target set of coordinate values Pn at least either according to different working time ranges or according to particular working states, and select target sets of coordinate values Pn from among them. Further, an operator can display the stored target set of coordinate values Pn on the display unit of the image output device 231 or the operation input device 222. There are a plurality of methods for displaying the target sets of coordinate values Pn, and it is possible to display the target sets of coordinate values Pn in any of forms among a form of displaying of all the target sets of coordinate values Pn, a form of displaying all groups Qn, a form of display according to different working time ranges, a form of display according to particular working states, and a form of display according to different working time ranges and according to particular working states. The operator can select a particular group Qn from among a displayed plurality of groups Qn.

A remote operation processing device according to the present invention controls the image-pickup angle of an image-pickup device by acquiring positions of an attachment during work, storing the positions as target sets of coordinate values, and determining the image-pickup angle so that the image-pickup direction of the image-pickup device is oriented based on distribution of the target sets of coordinate values. Therefore, it is possible to easily obtain an appropriate image-pickup field of view to be visually confirmed by an operator.

It is preferable that the remote operation processing device according to the present invention controls the image-pickup angle of the image-pickup device when receiving an instruction to start image-pickup angle adjustment from an operator.

The remote operation processing device of the present invention can control the image-pickup angle of the image-pickup device based on an operator's intention.

It is preferable that the remote operation processing device according to the present invention automatically acquires the positions of the attachment and stores the positions as the target sets of coordinate values.

The remote operation processing device of the present invention can easily obtain an appropriate image-pickup field of view to be visually confirmed by an operator.

It is preferable that the remote operation processing device of the present invention acquires at least either coordinate values of the attachment included in the working machine at time points of an operator performing a predetermined operation or coordinate values of a target object specified by the operator with an operation input device and stores the coordinate values as the target sets of coordinate values.

The remote operation processing device of the present invention acquires at least either coordinate values of the attachment included in the working machine at time points of an operator performing a predetermined operation, for example, a switch operation, or a target set of coordinate values specified by the operator with an operation input device. Therefore, it is possible to easily and certainly recognize coordinate values of a target object to be visually confirmed.

It is preferable that the remote operation processing device of the present invention stores, together with the target sets of coordinate values, which are coordinate values during the work of the attachment, related information associated with the target sets of coordinate values, detects current related information, and reads a target set of coordinate values stored in association with the related information to control the image-pickup angle of the image-pickup device.

The remote operation processing device of the present invention detects a current related information and reads a target set of coordinate values stored in association with the related information to control the image-pickup angle of the image-pickup device. Therefore, it is possible to easily obtain an appropriate image-pickup field of view to be visually confirmed by an operator.

It is preferable that it is possible to delete the target sets of coordinate values stored in the remote operation processing device of the present invention by a predetermined operation by an operator.

Since the remote operation processing device of the present invention can delete target sets of coordinate values by an operator operation, it is possible to leave only necessary target sets of coordinate values and efficiently obtain an appropriate image-pickup field of view to be visually confirmed by an operator.

It is preferable that the remote operation processing system of the present invention is a remote operation processing system that includes a remote operation processing device, a remote operation device, and a working machine.

Since the remote operation processing system of the present invention includes a remote operation processing device, a remote operation device, and a working machine that are necessary components, it is possible to efficiently obtain an appropriate image-pickup field of view to be visually confirmed by an operator.

### Reference Signs List

- 100: remote operation processing device
- 200: remote operation device
- 222: operation input device
- 230: remote output interface
- 300: working machine
- 301: lower-part traveling body
- 322: image-pickup device
- 344: attachment
- 500: remote operation processing system
- P, Pn: target set of coordinate values
- Q, Qn: group
- R, Rn: representative set of coordinate values

## Claims

1. A remote operation processing device for supporting a remote operation of a working machine using a remote operation device, the remote operation processing device being capable of controlling an image-pickup angle of an image-pickup device arranged in the working machine to be remotely operated, wherein
the remote operation processing device acquires positions of an attachment included in the working machine during work, stores the positions as target sets of coordinate values, and controls the image-pickup angle of the image-pickup device based on distribution of the target sets of coordinate values.

2. The remote operation processing device according to claim 1, wherein, when receiving an instruction to start image-pickup angle adjustment from an operator, the remote operation processing device controls the image-pickup angle of the image-pickup device.

3. The remote operation processing device according to claim 1 or 2, wherein the remote operation processing device automatically acquires the positions of the attachment and stores the positions as the target sets of coordinate values.

4. The remote operation processing device according to any one of claims 1 to 3, wherein the remote operation processing device acquires at least one of coordinate values of the attachment included in the working machine at time points of an operator performing a predetermined operation and coordinate values of a target object specified by the operator with an operation input device, and stores the coordinate values as the target sets of coordinate values.

5. The remote operation processing device according to any one of claims 1 to 4, wherein the remote operation processing device stores, together with the target sets of coordinate values, which are coordinate values during the work of the attachment, related information associated with the target sets of coordinate values, detects current related information, and reads a target set of coordinate values stored in association with the related information to control the image-pickup angle of the image-pickup device.

6. The remote operation processing device according to any one of claims 1 to 5, wherein it is possible to delete the target sets of coordinate values stored in the remote operation processing device by a predetermined operation by an operator.

7. A remote operation processing system comprising the remote operation processing device, the remote operation device, and the working machine according to claims 1 to 6.
